# EUROPÄISCHE PATENTSCHRIFT

(11) **EP 1 241 383 B1**
(45) Veröffentlichungstag und Bekanntmachung des Hinweises auf die Patenterteilung: **30.05.2007**
(21) Anmeldenummer: 02002605.0
(22) Anmeldetag: 05.02.2002
(51) Int. Cl.: F16J 15/12, F16J 15/08, F02F 11/00

(54) **Flachdichtung, insbesondere Zylinderkopfdichtung**
Gasket, in particular cylinder head gasket
Joint plat, en particulier joint de culasse

(30) Priorität: 15.03.2001 DE 10112392
(43) Veröffentlichungstag der Anmeldung: 18.09.2002
(73) Patentinhaber: Federal-Mogul Sealing Systems GmbH, 57562 Herdorf (DE)
(72) Erfinder: Weckbecker, Klaus, 42929 Wermelskirchen (DE)

(56) Entgegenhaltungen:
- EP-A- 0 872 671

## Beschreibung

Die Erfindung betrifft eine Flachdichtung für Brennkraftmaschinen, insbesondere Zylinderkopfdichtung, mit mindestens einer metallischen Lage die taschenartige Ausnehmungen mit einem Boden zur Aufnahme von verformbaren Dichtelementen aufweist, die zur Abdichtung eines eine T-Stelle bildenden Dichtbereiches dienen, wobei die Dichtelemente nach Einbau der Flachdichtung infolge Dichtflächenpressung derart verformt sind, dass sie in Richtung der T-Stelle verdrängt sind.

Die DE-A 198 45 320 beschreibt eine Zylinderkopfdichtung für eine Brennkraftmaschine mit einem an einem Motorblock seitlich angeschraubten und von der Zylinderkopfdichtung abgedichteten Gehäuse zur Aufnahme von Antriebsmitteln, wobei zur Abdichtung des Gehäuses am stirnseitigen Endbereich der Zylinderkopfdichtung eine aus elastomerem Werkstoff bestehende elastische Dichtung angeordnet ist, die sich im Einbauzustand in einen Spalt erstreckt, der sich durch Motorkopfgehäuse und Zylinderkopf toleranzbedingt ergibt. Am stirnseitigen Endbereich der Zylinderkopfdichtung ist mindestens eine Senkung angeordnet, deren Tiefe vom Endbereich radial nach innen kontinuierlich abnimmt. In der Senkung ist die elastische Dichtung aufgenommen, ohne über den Endbereich der Zylinderkopfdichtung nach außen vorzustehen, wobei die Senkung beim Einbau der Zylinderkopfdichtung infolge der Dichtflächenpressung derart verformbar ist, dass die Dichtung zum stirnseitigen Endbereich verdrängt ist. Hier ist die Gefahr gegeben, dass bei der Verspannung von Zylinderkopf und Motorblock der über den Endbereich der Zylinderkopfdichtung nach außen vorstehende Anteil des Dichtelementes abgeschert wird, so dass eine wirksame Dichtung nicht realisierbar ist.

Der EP-B 0 646 714 ist eine Metallflachdichtung für zwei mittels Schraubbolzen an ihren Stoßflächen miteinander zu verspannenden Teilen, insbesondere eines Verbrennungsmotors, zu entnehmen, mit einem aus einem Metallblech bestehenden Flachdichtungsteil, das eine zu den abzudichtenden Stoßflächen korrespondierende mit Löchern für die Schraubbolzen versehene Form aufweist und mit wenigstens einem Öffnungsbereich sowie einer den Öffnungsbereich vorzugsweise umgebenden Sicke versehen ist. Das Flachdichtungsteil ist oberflächenbeschichtet und im Bereich von abzudichtenden Tiefstellen, vorzugsweise in Taschen, mit einem plastisch verformbaren Dichtungsmaterial derart beschichtet, dass bei der Montage das Dichtungsmaterial in die angrenzenden Bereiche des Flachdichtungsteiles gedrückt wird.

Bei Verbrennungskraftmaschinen kommen unter anderem Bauformen zum Tragen, bei denen die Antriebskette ölgeschmiert in einem separaten Kettenkastengehäuse geführt wird. Ein derartiges Gehäuse kann mit dem Motorkopf und -block durch Ausbildung einer T-Schnittstelle verbunden sein. Charakteristisch für die Abdichtung ist, dass an einer derartigen Schnittstelle mindestens zwei Dichtungen zueinander in Kontakt stehen müssen, wobei der Formschluß durch gezielt eingesetzte Abdichtelemente an den Stoßstellen der beiden Dichtungspartner hergestellt wird.

Eine Lösungsmöglichkeit ist in der vorab zitierten EP-B 0 646 714 angesprochen worden. Infolge der beim Stand der Technik gegebenen plastischen Verformbarkeit wird das Dichtungsmaterial bei der Montage zerstört, so dass es nicht gezielt in den angrenzenden Dichtbereich der T-Schnittstelle eindringen kann. Somit kann es geschehen, dass lediglich eine partielle Abdichtung gebildet wird. Weiterhin nachteilig ist festzustellen, dass das Material in Abhängigkeit von der Länge des zu überbrückenden Spaltes bei der plastischen Verformung abgeschert wird, so dass die erwünschte Abdichtung nicht gewährleistet werden kann.

Der Erfindung liegt die Aufgabe zugrunde, die im gattungsbildenden Teil des ersten Patentanspruches beschriebene Flachdichtung dahingehend weiterzubilden, dass die Nachteile des Standes der Technik nicht mehr gegeben sind und insbesondere für eine Einlagenflachdichtung, insbesondere Einlagenzylinderkopfdichtung für Verbrennungskraftmaschinen, eine Möglichkeit aufgezeigt wird, ohne Beschädigung des Dichtelementes im Verlauf des Montagevorganges die angesprochene T-Stelle optimal abdichten zu können.

Diese Aufgabe wird dadurch gelöst, dass der Boden der taschenartigen Ausnehmungen mindestens eine Aussparung aufweist, die als Ausweichraum für ein verdrängtes Dichtelement fungiert.

Vorteilhafte Weiterbildungen des Erfindungsgegenstandes sind den Unteransprüchen zu entnehmen.

Dadurch, dass das jeweilige Dichtelement die zugehörige taschenartige Ausnehmung nur partiell ausfüllt, ist hinreichend Raum gegeben, um bei Druckbeaufschlagung durch miteinander zu verspannende Teile einerseits den verbleibenden Freiraum weiter auszufüllen und andererseits in durch mindestens einen weiteren Ausweichraum im Bereich der taschenartigen Ausnehmung einzudringen, ehe das Dichtelement über die Begrenzungskante der Flachdichtung hinaus in Richtung der durch die T-Stelle gebildeten Dichtbereiches elastisch verformt wird. Die zumindest partielle Unterstützung des jeweiligen Dichtelementes durch Bildung mindestens eines Steges, der zumindest bis in die Nähe der jeweiligen Flachdichtungsbegrenzungskante geführt ist, kann ein Abscheren des Dichtungsmaterials bei Druckbeaufschlagung der so miteinander zu verspannenden Teile sicher verhindert werden. Der weitere Ausweichraum, gebildet durch die Aussparung(en) im Bereich der Tasche, ist im wesentlichen definiert durch deren Form sowie die Dicke des Taschenbodens.

Der Erfindungsgegenstand ist bevorzugt bei metallischen Einlagenflachdichtungen, wie Zylinderkopfdichtungen für Verbrennungskraftmaschinen, einsetzbar. Er ist jedoch nicht darauf beschränkt, vielmehr besteht auch die Möglichkeit, den Erfindungsgegenstand bei einem Mehrlagendesign einer Flachdichtung wirkungsvoll einzusetzen.

In der jeweiligen Lage der Flachdichtung werden entsprechende Aufnahmetaschen gerundeter oder eckiger Form gebildet, in welche der Dichtungswerkstoff appliziert wird. Die Tasche kann vorzugsweise mit einer Halbsicke umgeben werden, um beim Aufschrauben beispielsweise eines Zylinderkopfes auf einen Zylinderbock durch die sich ausbildende Linienpressung auf dem Sickenkamm das in der Tasche befindliche Dichtungsmaterial bevorzugt in Richtung Taschenöffnung zu extrudieren, ohne selbiges zu zerstören.

Form und Ausgestaltung der taschenartigen Ausnehmung sowie des zum Einsatz gelangenden Dichtelementes bleiben dem Anwendungsfall vorbehalten. Gleiches gilt für den zu bildenden Ausweichraum innerhalb der jeweiligen taschenartigen Ausnehmung, in welchen das Dichtungsmaterial ausweichen kann.

Je nach Anwendungsfall kann es sinnvoll sein, die Aussparung so auszugestalten, dass deren freies Ende nicht mit der Begrenzungskante der Flachdichtung übereinstimmt. Diese Maßnahme erlaubt ein zerstörungsfreies Eindringen des Dichtmaterials in den im Kraftnebenschluß liegenden Abdichtbereich der T-Stelle. In jedem Fall ist sicherzustellen, dass der zurückgesetzte Bereich der Auflage vorzugsweise so groß ausgebildet ist, dass nach dem Verspannen der Bauteile, insbesondere des Zylinderkopfes mit dem Zylinderblock und vor Anschrauben des Kettenkastens das Dichtelement noch sicher zwischen Kopf und Block fixiert ist. Auch hier obliegt die Auslegung des Auflagebereiches in Verbindung mit der notwendigen Dichtwerkstoffmenge dem konkreten Anwendungsfall.

Einem weiteren Gedanken der Erfindung gemäß besteht die Möglichkeit, innerhalb einer taschenförmigen Ausnehmung vorzugsweise zwei Dichtelemente zu plazieren, die auf entsprechenden Stegen abgestützt sind. Unter Bildung von Schlitzen werden innerhalb der jeweiligen taschenartigen Ausnehmung entsprechende Abstützbereiche für das jeweilige Dichtelement gebildet.

Vorzugsweise kommt ein Dichtmaterial mit hoher Elastizität zum Einsatz, um ein zerstörungsfreies Fließen bis in den abzudichtenden Spalt zu gewährleisten. Hier bieten sich flüssige oder pastöse Elastomermaterialien, mikroverkapselte Elastomermaterialien oder nach erfolgter Vernetzung feste Elastomermaterialien an.

Der Erfindungsgegenstand ist anhand eines Ausführungsbeispieles in der Zeichnung dargestellt und wird wie folgt beschrieben. Es zeigen:
- Figur 1: Prinzipskizze einer möglichen Bauform einer Verbrennungskraftmaschine;
- Figur 2: Prinzipskizze gemäß Figur 1 mit angedeuteten Dichtungen;
- Figur 3: Teildarstellung gemäß Figur 2 mit einer mehrlagigen Zylinderkopfdichtung;
- Figur 4: Teildarstellung gemäß Figur 2 mit einer einlagigen Zylinderkopfdichtung;
- Figur 5a - g: Darstellung verschiedener taschenartiger Ausnehmungen im Bereich einer Zylinderkopfdichtung gemäß Figur 4 zur Aufnahme unterschiedlich gestalteter Dichtelemente.

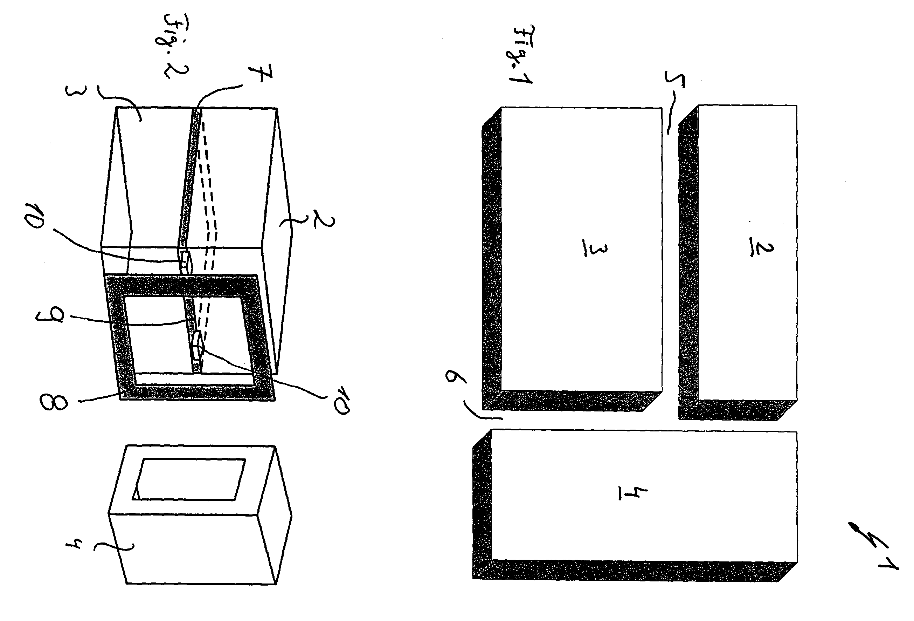

Figur 1 zeigt eine mögliche Bauform einer Verbrennungskraftmaschine 1, beinhaltend einen Zylinderkopf 2, einen Zylinderblock 3 sowie einen Kettenkasten 4. Im Spalt 5 zwischen Zylinderkopf 2 und Zylinderblock 3 wird eine nicht weiter dargestellte Zylinderkopfdichtung positioniert. Im Spalt 6 wird zwischen Zylinderkopf 2/Zylinderblock 3 und Kettenkasten 4 eine ebenfalls nicht dargestellte Flachdichtung eingebracht. Die Spalte 5,6 definieren die sogenannte T-Schnittstelle.

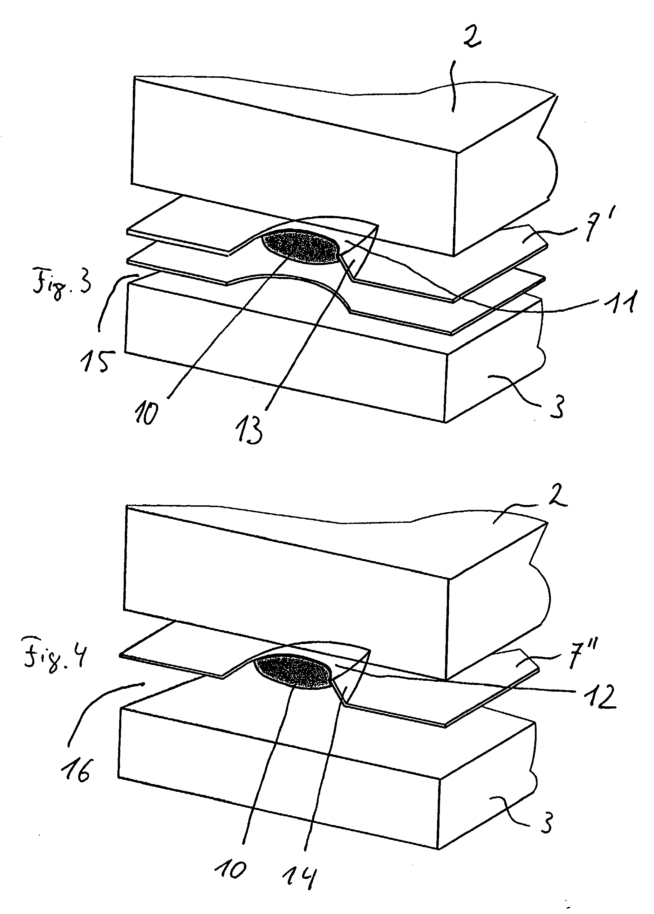

Figur 2 zeigt in anderer Darstellung die Bauteile gemäß Figur 1. Erkennbar sind der Zylinderkopf 2, der Zylinderblock 3 sowie der Kettenkasten 4. Des weiteren angedeutet ist die in den Spalt 5 einzubringende Zylinderkopfdichtung 7 sowie die zwischen Zylinderkopf 2/Zylinderblock 3 und Kettenkasten 4 zu positionierende Flachdichtung 8.

Zur Überwindung der im Bereich der T-Schnittstelle 5,6 gegebenen Abdichtprobleme zwischen der Stirnseite 9 der Zylinderkopfdichtung 7 und der Flachdichtung 8 sind angedeutete Dichtelemente 10 im Bereich der Stirnfläche 9 der Zylinderkopfdichtung 7 positioniert. Beim Verspannen des Zylinderkopfes 2 gegenüber dem Zylinderblock 3 werden auch die Dichtelemente 10 elastisch verformt, dergestalt, dass sie, bedingt durch eine vorgegebene Elastizität, sich in Richtung der Flachdichtung 8 elastisch verformen und dort dichtend zur Anlage kommen, ohne beschädigt zu werden.

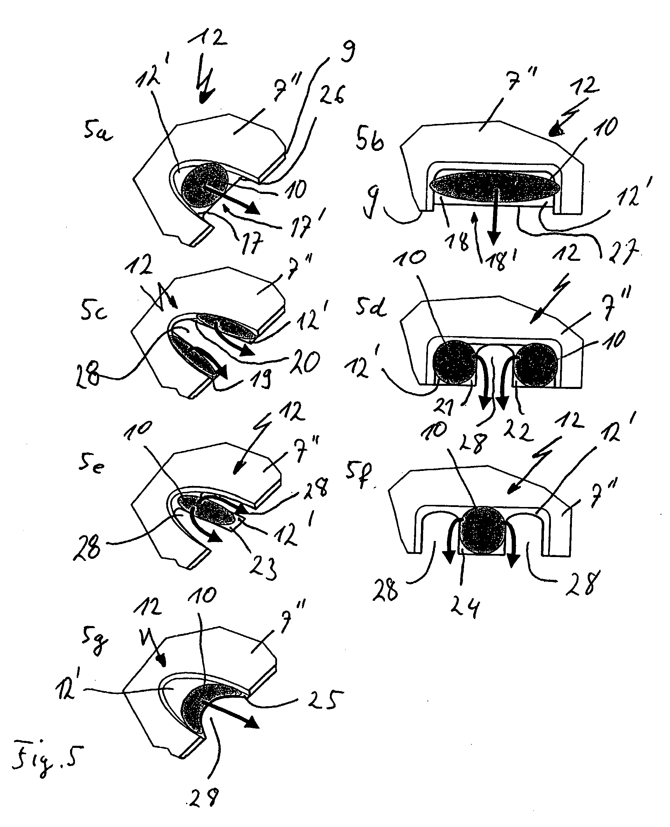

Die Figuren 3 und 4 zeigen Prinzipskizzen gemäß Figur 2. Figur 3 beinhaltet eine mehrlagige Zylinderkopfdichtung 7', während Figur 4 eine einlagige, aus einer Metallage gebildeten Zylinderkopfdichtung 7" darstellt. Ferner angedeutet sind die Zylinderköpfe 2 sowie die Zylinderblöcke 3. Im Bereich der Zylinderkopfdichtungen 7',7" sind taschenartige Ausnehmungen 11,12 eingebracht, in welchen die Dichtelemente 10 plaziert sind. Die Dichtelemente 10 sind hierbei so vorgesehen, dass sie die taschenartigen Ausnehmungen 11,12 nur partiell ausfüllen. Angedeutet sind die taschenartigen Ausnehmungen 11,12 zumindest partiell umgebende Halbsicken 13,14. Beim Verspannen des Zylinderkopfes 2 gegenüber dem Zylinderblock 3 findet eine sich ausbildende Linienpressung auf den Sickenkamm statt, wodurch das in der taschenartigen Ausnehmung 11,12 befindliche Dichtelement 10 bevorzugt in Richtung der Öffnung 15,16 der taschenartigen Ausnehmung 11,12 extrudiert und an der in Figur 2 dargestellten Flachdichtung 8 dichtend zur Anlage kommt.

Die Figuren 5a - g zeigen verschiedene Bauformen taschenartiger Ausnehmungen 12 gemäß Figur 4, wie sie in eine einlagige Metall-Zylinderkopfdichtung 7" eingebracht werden können. Wie aus Figur 5 erkennbar, können die taschenartigen Ausnehmungen 12 unterschiedlichste geometrische Formen aufweisen (gerundet, eckig), so dass sie zur Aufnahme ebenfalls unterschiedlich ausgestalteter Dichtelemente 10 dienen können. Je nach Ausführung der taschenartigen Ausnehmung 12 können bedarfsweise auch zwei Dichtelemente 10 in der zugehörigen taschenartigen Ausnehmung 12, plaziert werden. Eine jede taschenartige Ausnehmung 12 beinhaltet einen Boden 12'. Ein jedes Dichtelement 10 ist dergestalt in der zugehörigen taschenartigen Ausnehmung 12 plaziert, respektive auf den Boden 12', dass es selbige(n) nur partiell ausfüllt, so dass bei Druckausübung beim Verspannen des hier nicht weiter dargestellten Zylinderkopfes gegenüber dem Zylinderblock ein elastisches Fließen des hochelastischen Dichtelementes 10 (siehe Pfeilrichtungen) bewirkt wird. Ein jedes Dichtelement 10 ruht bodenseitig auf einer Restfläche 17,18,19,20,21,22,23,24,25. Je nach Anwendungsfall kann es sinnvoll sein, das freie Ende 26,27 der Restfläche 17,18 zur Bildung der, einen weiteren Ausweichraum begründenden Aussparung 17',18' vor der Stirnfläche 9 der Zylinderkopfdichtung 7" enden zu lassen. In jedem Fall ist jedoch sicherzustellen, dass eine genügende Restfläche 17-25 für das jeweilige Dichtelement 10 gegeben ist, so dass bei der Verspannung von Zylinderkopf und Zylinderblock kein Abscheren des Dichtelementes 10 erfolgt, sondern vielmehr eine elastische Verformung in Richtung der Flachdichtung 8 (Figur 2) ermöglicht wird. Durch Bildung von Ausweichräume bildenden Aussparungen 17',18' wird es dem Dichtelement 10 ermöglicht, auch in diese einzudringen und auszufüllen. Der mögliche Verdrängungsraum wird hierbei durch die Querschnittsform der Aussparung 17',18' sowie die Dicke des jeweiligen Bodens 12' definiert. Die Restflächen 17,18,25 können bedarfsweise, an die Form des Dichtelementes 10 angepaßt, im wesentlichen durchgängig ausgebildet werden (Ausnahme Figuren 5a,5b). Alternativ besteht die Möglichkeit, die Restflächen 19,20,21,22,23,24 als zungenartige Stege auszubilden, die bedarfsweise an die jeweilige geometrische Form des Dichtelementes 10 angepaßt werden können. Auch hier ist wesentlich, dass eine ausreichende Restfläche für das jeweilige Dichtelement 10 gegeben ist. Die in Figur 5a bis 5g dargestellten Dichtelemente 10 können aus hochelastischen Materialien, wie beispielsweise flüssigem oder pastösem Elastomermaterial, mikroverkapseltem Elastomermaterial oder dergleichen gebildet werden. Alternativ besteht auch die Möglichkeit, ein flüssiges oder pastöses, gegebenenfalls mikroverkapseltes Material zum Einsatz zu bringen, welches nach seiner Vernetzung ein festes, jedoch elastisch verformbares Dichtelement 10 bildet. Bei Verwendung von Stegen als Restflächen werden in diesem Bereich entsprechende Aussparungen 28 gebildet. Das Dichtelement 10 kann somit diesen Ausweichraum in der taschenartigen Ausnehmung 12 füllen und gleichzeitig in Richtung der Öffnung der Ausnehmung extrudieren, ohne dass es zu Beschädigungen am Dichtelement 10 kommt.

## Patentansprüche

1. Flachdichtung für Brennkraftmaschinen, insbesondere Zylinderkopfdichtung, mit mindestens einer metallischen Lage die taschenartige Ausnehmungen (11,12) mit einem Boden (12') zur Aufnahme von verformbaren Dichtelementen (10) aufweist, die zur Abdichtung eines eine T-Stelle bildenden Dichtbereiches (5,6) dienen, wobei die Dichtelemente (10) nach Einbau der Flachdichtung infolge Dichtflächenpressung derart verformt sind, dass sie in Richtung der T-Stelle (6) verdrängt sind, **dadurch gekennzeichnet, dass** der Boden (12') der taschenartige Ausnehmungen (11,12) mindestens eine Aussparung (17', 18',28) aufweist, die als Ausweichraum für ein verdrängtes Dichtelement (10) fungiert.

2. Flachdichtung nach Anspruch 1, **dadurch gekennzeichnet, dass** die Aussparung (17',18') sich am stirnseitigen Endbereich der taschenartigen Ausnehmung (12) erstreckt, so dass der Boden (12') eine Begrenzungskante (26) aufweist, die gegenüber dem stirnseitigen Endbereich (9) der Ausnehmung (12) zurückgesetzt ist.

3. Flachdichtung nach Anspruch 1, **dadurch gekennzeichnet, dass** die Aussparung (28) sich nach innen durch die gesamten Tiefe des Bodens (12') erstreckt, wobei die Breite der Aussparung (28) so gewählt ist, dass eine Restfläche (19,20,21,22,23,24) des Bodens (12') zur Aufnahme eines Dichtelementes (10) gebildet ist.

4. Flachdichtung nach einem der Ansprüche 1 bis 3, **dadurch gekennzeichnet, dass** die Restfläche (23,24) als zentral sich erstreckender Steg ausgebildet ist.

5. Flachdichtung nach einem der Ansprüche 1 bis 4, **dadurch gekennzeichnet, dass** die Aussparung (28) zentral angeordnet ist, so dass die Restfläche (19,20,21,22) am Randbereich der taschenartigen Ausnehmung (12) angeordnet ist.

6. Flachdichtung nach einem der Ansprüche 1 bis 5, **dadurch gekennzeichnet, dass** die taschenartige Ausnehmung (12) eine etwa rechteckige Form aufweist.

7. Flachdichtung nach einem der Ansprüche 1 bis 5, **dadurch gekennzeichnet, dass** die taschenartige Ausnehmung (12) eine gerundete Form aufweist.

8. Flachdichtung nach einem der Ansprüche 1 bis 7, **dadurch gekennzeichnet, dass** innerhalb der taschenartigen Ausnehmung (12) mehrere nicht miteinander verbundene Dichtelemente (10) angeordnet sind.

9. Flachdichtung nach einem der Ansprüche 1 bis 8, **dadurch gekennzeichnet, dass** die jeweilige Ausnehmung (12) von einer Sicke oder einer Halbsicke (14) zumindest partiell umgeben ist.

10. Flachdichtung nach einem der Ansprüche 1 bis 9, **dadurch gekennzeichnet, dass** das Verhältnis Volumen Dichtelement zu Volumen Ausnehmung (12) so geregelt ist, dass das verdrängte Dichtelement (10) bis über den stirnseitigen Endbereich (9) der Flachdichtung hinausragt.

11. Flachdichtung nach einem der Ansprüche 1 bis 10, **dadurch gekennzeichnet, dass** das Dichtelement (10) hochelastisch ausgebildet ist.

12. Flachdichtung nach einem der Ansprüche 1 bis 11, **dadurch gekennzeichnet, dass** das Dichtelement (10) durch ein flüssiges oder pastöses Elastomermaterial gebildet ist.

13. Flachdichtung nach einem der Ansprüche 1 bis 11, **dadurch gekennzeichnet, dass** das Dichtelement (10) durch ein mikroverkapseltes Elastomermaterial gebildet ist.

14. Flachdichtung nach einem der Ansprüche 1 bis 11, **dadurch gekennzeichnet, dass** das Dichtelement (10) durch ein flüssiges oder pastöses, gegebenenfalls mikroverkapseltes Material gebildet ist, welches nach seiner Vernetzung ein festes elastisch verformbares Elastomermaterial darstellt.

## Claims

1. A flat gasket for internal combustion engines, especially a cylinder head seal, with at least one metal layer which comprises pocket-like recesses (11, 12) with a bottom (12') for reception of deformable sealing elements (10), which serve to seal a sealing region (5, 6) forming a T-point, wherein the sealing elements (10) are so deformed after fitting the flat gasket, on account of the sealing surface pressure, that they are forced in the direction of the T-point (6), **characterized in that** the bottom (12') of the pocket-like recesses (11, 12) has at least one cut-out (17', 18', 28) which functions as an escape space for a displaced sealing element (10).

2. A flat gasket according to claim 1, **characterized in that** the cut-out (17', 18') extends to the front end region of the pocket-like recess (12), so that the bottom (12') has a bounding edge (26) which is set back relative to the front end region (9) of the recess (12).

3. A flat gasket according to claim 1, **characterized in that** the cut-out (28) extends inwards through the whole depth of the bottom (12), the width of the cut-out (28) being so selected that a residual surface (19, 20, 21, 22, 23, 24) of the bottom (12') for reception of a sealing element (10) is formed.

4. A flat gasket according to any of claims 1 to 3, **characterized in that** the residual surface (23, 24) is formed as a centrally extending tongue.

5. A flat gasket according to any of claims 1 to 4, **characterized in that** the cut-out (28) is arranged centrally, so that the residual surface (19, 20, 21, 22) is arranged at the edge region of the pocket-like recess (12).

6. A flat gasket according to any of claims 1 to 5, **characterized in that** the pocket-like recess (12) has an approximately rectangular shape.

7. A flat gasket according to any of claims 1 to 5, **characterized in that** the pocket-like recess (12) has a rounded shape.

8. A flat gasket according to any of claims 1 to 7, **characterized in that** a plurality of sealing elements (10) not connected to one another are arranged in the pocket-like recess (12).

9. A flat gasket according to any of claims 1 to 8, **characterized in that** the recess (12) in question is at least partially surrounded by a bead or a semi-bead (14).

10. A flat gasket according to any of claims 1 to 9, **characterized in that** the ratio of the volume of the sealing element to the volume of the recess (12) is so regulated that the displaced sealing element (10) projects beyond the front end region (9) of the flat gasket.

11. A flat gasket according to any of claims to 10, **characterized in that** the sealing element (10) is of highly elastic form.

12. A flat gasket according to any of claims 1 to 11, **characterized in that** the sealing element (10) is formed by a liquid or pasty elastomer material.

13. A flat gasket according to any of claims 1 to 11, **characterized in that** the sealing element (10) is formed by a micro-encapsulated elastomer material.

14. A flat gasket according to any of claims 1 to 11, **characterized in that** the sealing element (10) is formed by a fluid or pasty, optionally micro-encapsulated material, which represents a solid, elastically deformable elastomer material after its cross-linking.

## Revendications

1. Joint d'étanchéité plat pour des moteurs à combustion interne, en particulier joint de culasse, comportant au moins une couche métallique munie d'évidements (11, 12) en forme de poche avec un fond (12'), destinés à recevoir des éléments d'étanchéité (10) déformables qui sont utilisés pour réaliser l'étanchéité dans une zone (5, 6) constituant un emplacement en forme de T, sachant que, après le montage du joint d'étanchéité plat, les éléments d'étanchéité (10) sont déformés sous l'effet d'une compression de la surface, de telle sorte qu'ils sont chassés vers l'emplacement en T (6), **caractérisé en ce que** le fond (12') des évidements (11, 12) en forme de poche comporte au moins une encoche (17', 18', 28), qui fait fonction d'espace de dégagement pour un élément d'étanchéité (10) qui a été chassé.

2. Joint d'étanchéité plat selon la revendication 1, **caractérisé en ce que** l'encoche (17', 18') s'étend au niveau de la zone d'extrémité frontale de l'évidement (12) en forme de poche, de telle sorte que le fond (12') comporte un bord de délimitation (26) qui est en retrait par rapport à la zone d'extrémité frontale (9) de l'évidement (12).

3. Joint d'étanchéité plat selon la revendication 1, **caractérisé en ce que** l'encoche (28) s'étend vers l'intérieur sur toute la profondeur du fond (12'), sachant que la largeur de l'encoche (28) est choisie de manière à former une surface restante (19, 20, 21, 22, 23, 24) du fond (12') pour recevoir un élément d'étanchéité (10).

4. Joint d'étanchéité plat selon l'une quelconque des revendications 1 à 3, **caractérisé en ce que** la surface restante (23, 24) est réalisée sous forme de nervure s'étendant de manière centrée.

5. Joint d'étanchéité plat selon l'une quelconque des revendications 1 à 4, **caractérisé en ce que** l'encoche (28) est agencée de manière centrée, de telle sorte que la surface restante (19, 20, 21, 22) est disposée au niveau de la zone de bord de l'évidement (12) en forme de poche.

6. Joint d'étanchéité plat selon l'une quelconque des revendications 1 à 5, **caractérisé en ce que** l'évidement (12) en forme de poche a une forme à peu près rectangulaire.

7. Joint d'étanchéité plat selon l'une quelconque des revendications 1 à 5, **caractérisé en ce que** l'évidement (12) en forme de poche a une forme arrondie.

8. Joint d'étanchéité plat selon l'une quelconque des revendications 1 à 7, **caractérisé en ce que** à l'intérieur de l'évidement (12) en forme de poche sont disposés plusieurs éléments d'étanchéité (10) non reliés les uns aux autres.

9. Joint d'étanchéité plat selon l'une quelconque des revendications 1 à 8, **caractérisé en ce que** chacun des évidements (12) est entouré au moins partiellement d'un jonc ou d'un demi-jonc (14).

10. Joint d'étanchéité plat selon l'une quelconque des revendications 1 à 9, **caractérisé en ce que** le rapport entre le volume de l'élément d'étanchéité (10) et le volume de l'évidement (12) est réglé de telle sorte que l'élément d'étanchéité (10) chassé s'avance en saillie jusqu'au-delà de la zone d'extrémité frontale (9) du joint d'étanchéité plat.

11. Joint d'étanchéité plat selon l'une quelconque des revendications 1 à 10, **caractérisé en ce que** l'élément d'étanchéité (10) présente une élasticité élevée.

12. Joint d'étanchéité plat selon l'une quelconque des revendications 1 à 11, **caractérisé en ce que** l'élément d'étanchéité (10) est réalisé dans un matériau élastomère liquide ou pâteux.

13. Joint d'étanchéité plat selon l'une quelconque des revendications 1 à 11, **caractérisé en ce que** l'élément d'étanchéité (10) est réalisé dans un matériau élastomère à microcapsules.

14. Joint d'étanchéité plat selon l'une quelconque des revendications 1 à 11, **caractérisé en ce que** l'élément d'étanchéité (10) est réalisé dans un matériau liquide ou pâteux, le cas échéant à microcapsules, qui, après sa réticulation, constitue un matériau élastomère solide déformable élastiquement.
